# EUROPÄISCHE PATENTSCHRIFT

(11) **EP 1 982 141 B1**
(45) Veröffentlichungstag und Bekanntmachung des Hinweises auf die Patenterteilung: **27.07.2011**
(21) Anmeldenummer: 07721914.5
(22) Anmeldetag: 08.02.2007
(51) Int. Cl.: G01B 11/00, G05B 19/00, B25J 9/16

(54) **EINRICHTUNG UND VERFAHREN ZUR NACHVERFOLGUNG DER BEWEGUNG EINES WERKZEUGES EINER HANDHABUNGSEINHEIT**
DEVICE AND METHOD FOR FOLLOWING THE MOVEMENT OF A TOOL OF A HANDLING UNIT
DISPOSITIF ET PROCÉDÉ POUR SUIVRE LE MOUVEMENT D'UN OUTIL D'UNE UNITÉ DE MANIPULATION

(30) Priorität: 10.02.2006 DE 102006006475
(43) Veröffentlichungstag der Anmeldung: 22.10.2008
(73) Patentinhaber: LKT GmbH, 52068 Aachen (DE)
(72) Erfinder: BÖHM, Stefan, 38179 Schwülper (DE); HELLMANNS, Mark, 52146 Würselen (DE); DILGER, Klaus, 38106 Braunschweig (DE); BRAKHAGE, Karl-Heinz, 52477 Alsdorf (DE)
(74) Vertreter: Gerstein, Hans Joachim
(86) Internationale Anmeldenummer: PCT/DE2007/000248
(87) Internationale Veröffentlichungsnummer: WO 2007/090388

(56) Entgegenhaltungen:
- EP-A- 1 525 954
- EP-A2- 0 997 579
- WO-A-02/10681
- DE-A1- 3 629 689
- DE-A1- 19 752 290

## Beschreibung

Die Erfindung betrifft eine Einrichtung zur Nachverfolgung der Bewegung eines Werkzeuges einer Handhabungselnheit mit mindestens einem auf das Werkzeug ausrichtbaren und nachführbaren Richtstrahler, der jeweils eine gerichtete Strahlung in Form eines Richtstrahlers ausstrahlt, und einer Signalauswerteeinheit zur Ermittlung der Bewegung, wobei der Richtstrahler jeweils Aktuatoren zur Ausrichtung eines jeweiligen Richtstrahls des zugehörigen Richtstrahlers In einstellbarem Winkel in Bezug auf eine festgelegte Raumebene, und Winkelsensoren zur Bestimmung des aktuellen Richtstrahlwinkels in Bezug auf die Raumstrahlebene haben, und die Winkelsensoren mit der Signalauswerteeinheit verbunden sind, wobei mindestens ein Richtstrahlsensor zur Detektion jeweils eines auf einen zugeordneten Richtstrahlsensor ausgerichteten Richtstrahls in festem Bezug auf das Werkzeug mit dem Werkzeug mitbewegbar angeordnet und mit der Signalauswerteeinheit verbunden sind, und wobei die Signalauswerteeinhelt zur Nachführung der Lichtstrahlen des mindestens einen Richtstrahls auf einen zugeordneten, sich bewegenden Richtstrahlaensor und zur Ermittlung der beliebigen Bewegung des Werkzeuges im dreidimensionalen Raum in Abhängigkeit von den Richtstrahlwinkeln eingerichtet ist.

Die Erfindung betrifft weiterhin ein Verfahren zur Nachverfolgung der Bewegung eines Werkzeuges einer Handhabungseinheit nach dem Oberbegriff des Anspruchs 16.

Handhabungseinheiten in Form von automatischer oder mindestens teilweise (d.h. auch ggf. vollständig) handgeführten Maschinen oder Geräten sind hinreichend z. B. in Form von Robotern, Montagehilfen, Klebstoffauftragpistolen etc. bekannt.

Um die Geschwindigkeit eines bewegten Körpers der Handhabungseinheit berührungslos und ohne Interaktion mit der Umgebung zu bestimmen, werden herkömmlicherweise inertialsysteme eingesetzt, die üblicherweise aus Beschleunigungssensoren und Drehratensensoren sowie zusätzlich manchmal auch aus Magnetfeldsensoren bestehen.

Die DD 301 529 A7 beschreibt eine Anordnung zur Kalibrierung optischer Sensoren in Inertialsystemen, die sich ggf. im Betrieb durch unterschiedliche Effekte In der Position oder Ausrichtung geändert haben.

Die DE 196 51 543 C1 offenbart ein inertiales System, dass zur Verbesserung der Langzeitgenauigkeit eine satellitengestützte Ortsbestimmung durchführt. Ein hierzu ähnliches System ist in der WO 96-08730 A1 beschrieben. Hier werden zwei Satellitennavigationssignalempfänger und zwei Antennen zur Bestimmung des Kurses eingesetzt.

Auf Grund der Eigenschaft von Inertialsystemen, die Geschwindigkeit nicht direkt zu messen, sondern diese aus der Integration von Beschleunigungssensorsignalen zu gewinnen, werden Fehler aufaddiert. Diese lassen nur eine relativ kurze Zeit eine Bestimmung der Geschwindigkeit zu, bevor der aufaddierte Fehler zu groß wird. Durch Verbesserung der Sensoren kann der Fehler minimiert, aber auf Grund der physikalischen/mathematischen Zusammenhänge nie ganz vermieden werden. So tritt durch Temperatureinflüsse oder eine Nullpunktverschiebung eine Signaldrift auf. Auf Grund der endlichen Genauigkeit in der üblichen numerischen Berechung sind auch Rundungsfehler ein Problem.

Die Anwendungsmöglichkeiten von inertialen Messsystemen werden zudem von der Messgenauigkeit ihrer Inertialsensoren (Kreisel- und Beschleunigungsmesser) begrenzt. Zur Steigerung der Messgenauigkeit werden die Inertialsensoren und Inertialsysteme vor der Auslieferung und zu bestimmten Wartungsterminen in speziellen Testvorrichtungen kalibriert. Diejenigen Parameter der Sensorkannlinie, die sich beim Einschalten und im Betrieb stochastisch verändern, können jedoch nicht im Voraus kalibriert werden und führen zu entsprechenden Messfehlern.

Ein Verfahren zur Erkennung und Korrektur von Messfehlern von Inertialsystemen im ungestützten inertialen Betrieb, bei dem keine externen Stützreferenzen zur Verfügung stehen, ist in der DE 198 24 904 A1 beschrieben.

Um den Einsatz von preiswerten Inertialsensoren aus einer Massenfertigung zur ausreichend genauen Messung von Beschleunigungen und Winkelgeschwindigkeiten zu ermöglichen, ist in der DE 198 58 621 C2 vorgeschlagen, die Inertialsensoren zunächst auf einer Prüfeinrichtung in einem Justiervorgang insgesamt zu vermessen. Dabei werden offset-, Einbaulage- und Skalierungsfehler in Koeffizienten von Kopplungsmatrizen der Inertialsensoren erfasst und in korrekturwerte umgerechnet. Diese können dann im Betrieb zur Verbesserung der Genauigkeit der Messwerte der Inertialsensoren benutzt werden.

Neben Inertialsystem sind auch Konzepte bekannt, bei denen mit Hilfe von Bildsensoren, wie beispielsweise einer Kamera, die Lage eines Werkzeuges, eines Roboters oder eines Werkstücks mit Hilfe von Bildauswertemethoden bestimmt wird. Durch die oftmals undefinierte Umgebung, durch Schattenwurf und die erforderliche hohe Rechengeschwindigkeit zur Bildauswertung sind die Zuverlässigkeit und die Genauigkeit eingeschränkt.

Aus der DE 197 52 290 A1 ist ein Verfahren und eine Vorrichtung von Messung von Lage- und/oder Orientierung zusammenwirkender Maschineneinheiten bekannt. Mit einem an einer festen Messbasis angeordneten Sensor, der mit Sensoren auf ein beweglich angeordneten Maschinenständer und einer Maschineneinheit zusammenwirkt, soll mindestens eine der Größen Abstand, Position, Raumwinkel oder Orientierung oder eine Änderungsgröße hiervon unabhängig von den Antriebsachsen der Maschineneinheiten kontinuierlich oder in möglichst kurzen Abständen regelmäßig bestimmt werden, ohne dass die Sensoren und/oder die Maschineneinheiten in ihrer speziellen Messposition verfahren werden. Neben einer ersten Klasse von Sensoren, die direkte Koordinaten oder Änderungen dieser Koordinaten bezüglich der benutzten Bezugssysteme auswerten, wie beispielsweise Längen- und Winkelmesssysteme, berührungslose Messsysteme wie z. B. Laserinterferometer, wird die verwendung einer zeiten Klasse von Sensoren vorgeschlagen, mit denen Punkt-zu-Punkt Beziehungen von Objektpunkten untereinander berücksichtigt werden. Dies sind insbesondere die Abstände zwischen zwei Punkten des Messsystems sowie der oder die Raumwinkel der Verbindungslinie zwischen den zwei Punkten im benutzten Bezugssystem. Da die Messung der einzelnen Sensoren aus der zweiten Sensorklasse nicht mehr den zu messenden Achsbewegungen übereinstimmen, müssen sämtliche interessierenden Daten aus aus der Gesamtheit der Messungen berechnet werden. Dies wird als "parallel wirkende Sensoren" bezeichnet. Das System erfordert Kenntnis über die möglichen Bewegungsrichtungen und kann grundsätzlich nicht zur Erfassung beliebiger Bewegungen im dreidimensionalen Raum genutzt werden.

EP 1 525 954 A offenbart ein Verfahren und eine Vorrichtung zum Positionieren eines Handhabungsgerätes mit einem inertialmesssystem. Als Inertialmesssysteme kommen Beschleuniungssensoren, Gyroskope oder Systeme mit Messungen über erzeugte Felder oder dergleichen in Frage. Da das Inertialsystem regelmäßig korrigiert und abgeglichen werden muss, soll mittels eines zusätzlichen, externen Absolutmesssystems die Position eines Punktes des Werkzeuges bestimmt und zur Korrektur herangezogen werden.

Ausgehend hiervon ist es Aufgabe der vorliegenden Erfindung eine verbesserte Einrichtung und Verfahren zur Nachverfolgung der Bewegung eines Werkzeuges einer Handhabungseinheit zu schaffen.

Die Aufgabe wird durch die Einrichtung mit den Merkmalen des Anspruchs 1 sowie das Verfahren mit den Merkmalen des Anspruchs 16 gelöst. Vorteilhafte Ausführungsformen sind in den abhängigen Ansprüchen beschrieben.

Die Nachverfolgung der Bewegung erfolgt mit Hilfe von gerichteten Strahlen in Kombination mit einem Inertialsystem. Akkumulierte Fehler des Inertialsystems können dann mit Hilfe des Richtstrahl-Systems regelmäßig korrigiert werden. Auch bei Unterberechung des Richtstrahls, z. B, bei räumlich ungünstigen Bedingungen, ist eine weitere Nachverfolgung durch das Inertialsystem möglich.

Vorzugsweise ist mindestens ein Beschleunigungssensor mit dem Werkzeug zur quantitativen Erfassung der Beschleunigung und zur Erfassung der Beschleunigungsrichtung des Werkzeuges und mit einem Signalausgang mit der Signalauswerteeinheit verbunden. Die Signalauswerteeinheit ist dann zur Nachverfolgung der Bewegung des Werkzeuges und/oder zur Nachführung des mindestens einen Richtstrahlers in Abhängigkeit von den Beschleunigungssignalen des Beschleunigungssensors eingerichtet.

Der Inertialsensor kann alternativ oder zusätzlich auch zur quantitativen Erfassung der Drehraten und zur Erfassung der Drehrichtung des Werkzeuges vorgesehen sein. Die mit dem Inertialsensor verbundene Signalauswerteeinheit ist dann zur Nachverfolgung der Bewegung des Werkzeuges und/oder zur Nachführung des mindestens einen Richtstrahlers in Abhängigkeit von den Drehratensignalen des Drehratensensors eingerichtet.

Dann erfolgt vorzugsweise in Abhängigkeit von den detektierten Signalen des Richtstrahlsensors eine Ermittlung der translatorischen Bewegungen des Werkzeuges, während in Abhängigkeit von den Drehratensignalen die Ermittlung der rotatoriachen Bewegung des Werkzeuges durchgeführt wird.

Zur Ausrichtung eines Richtstrahlers auf einen zugeordneten Richtstrahlsensor ist lediglich eine Information des Richtstrahisensors erforderlich, ob der Richtstrahl detektiert wird oder nicht. Wenn ein Richtstrahl auf einen zugeordneten Richtstrahisensor ausgerichtet ist, ist es auf einfache Weise möglich, den mindestens einen Raumwinkel des Richtstrahls in Bezug auf eine festgelegte Raumebene mit Hilfe von Winkelsensoren des Richtstrahlers zu bestimmen. Bei Bewegung des Werkzeugs im dreidimensionalen Raum und eines in Bezug hierzu angeordneten Richtstrahlsensors wird ein Richtstrahl dem zugeordneten Richtstrahlsensor einfach nachgeführt, ohne dass weitere Kenntnis über vorgegebene Bewegungsachsen erforderlich ist. Aus dem Richtstrahlwinkel bzw. der Richtstrahlwinkeländerung kann dann zuverlässig und genau die Bewegung des Werkzeuges, d.h. Abstand, Position, Raumwinkel oder Orientierung oder eine ihrer Änderungsgrößen nachverfolgt werden, ohne dass es einer aufwendigen Rechenlogik oder Sensorik bedarf.

Ein wesentlicher Vorteil dieser Art der Bewegungsnachverfolgung ist es, dass Messfehler nicht wie beim Inertialsystem akkumuliert werden.

Um die Richtungeänderung des Werkzeugs zur schnellen Nachführung eines Richtstrahlers auf einen zugeordneten, sich bewegenden Richtstrahlsensor schnell und einfach erkennen zu können, ist mindestens ein Richtstrahlsensor aus einer Gruppe von nebeneinander angeordneten Einzelsensoren gebildet. Bei der Bewegung des Werkzeuges verlagert sich dann der detektierte Richtstrahl von einem Einzelsensor auf einen benachbarten Einzelsensor. Hieraus und aus der bekannten räumlichen Lage der Einzeisensoren zueinander kann dann auf einfache Weise die Richtung der Bewegungsänderung des Werkzeuges erkannt und ein Richtstrahler dem zugeordneten Richtstrahlsensor nachgeführt werden. Vorzugsweise erfolgt die Nachführung eines Richtstrahls auf einen Einzelsensor im Zentrum des zugeordneten Richtstrahlzensors, so dass die umliegenden Einzelsensoren lediglich zur Erkennung der Bewegungsrichtung und Nachführung eingesetzt werden.

Vorzugsweise ist mindestens ein Richtstrahlsensor aus einem Halbleiterfoto-Flächenelement wie beispielsweise einer großflächigen Fotodiode, einem Fototransistor oder einem optischen Sensor, wie z.B. einer positionsempfindlichen Einheit (Position Sensitive Device - PSD) gebildet. Eine besonders einfache, preiswerte und zuverlässige Ausführungsform eines Richtstrahlsensors hat ein Halbleiterfoto-Flächenelement mit einer gemeinsamen Annode bzw. Kathode und einer Mehrzahl von jeweils einem Flächenbereich des Halbleiterfoto-Flächenelementes zugeordneten Kathoden bzw. Anoden. Mit Hilfe der einzelnen Kathoden bzw. Anoden ist es bei einem solchen integralen Halbleiterfoto-Flächenelement möglich, den Auftreffpunkt eines Richtstrahls auf einen Flächenbereich des Halbleiterfoto-Flächenelements zu delektieren.

Zur Detektion der Bewegung des Werkzeugs in Bezug auf eine Raumebene hat die Einrichtung vorzugsweise genau einen Richtstrahler. Es ist auch denkbar auch eine Triangulation mit gerichteter Strahlung unter Verwendung von mindestens zwei Richtstrahlern zur Detektion der Bewegung des Werkzeuges im dreidimensionalen Raum durchzuführen.

Bei der Verwendung von mehr als einem Richtstrahler ist es vorteilhaft, wenn die Richtstrahler voneinander unterschiedliche Richtstrahlen aussenden, so dass die Richtstrahlsensoren die Herkunft der Richtstrahlen erkennen und in Abhängigkeit davon die Signalauswerteeinheit eine Ansteuerung des zugeordneten Richtstrahlers zur Richtstrahlwinkeländerung durchführen kann.

Die Richtstrahlen können beispielsweise voneinander unterschiedliche Wellenlängen haben oder voneinander unterschiedliche Modulationen oder Codierungen aufweisen.

Zur Initialisierung der Einrichtung, d. h. zur automatischen Zielverfolgung, wird der Raumbereich vorzugsweise mit Richtstrahlen in einer Ausrichtsequenz zur Lokalisierung des mindestens einen Richtstrahlsensors des Werkzeuges durch die Richtstrahlen abgescannt.

Nachdem der mindestens eine Richtstrahl jeweils auf einen zugeordneten Richtstrahisensor ausgerichtet ist, kann die Nachverfolgung der Bewegung in oben beschriebener Weise durchgeführt werden.

Die nachverfolgte Bewegung des Werkzeuges kann beispielsweise in einem Speicher zur Qualitätssicherung aufgezeichnet werden. Auf diese Weise ist es insbesondere bei handgeführten Montage- und Bearbeitungsgeräten möglich zu überprüfen, ob der Werker die Qualitätsvorschriften eingehalten hat. So kann beispielsweise überprüft werden, ob bei der Montage von Fahrzeugrädern sämtliche Befestigungsschrauben für die Felgen montiert und angezogen worden sind.

Die Handhabungseinheit kann beispielsweise ein teilweise oder vollständig handgeführtes Montagewerkzeug, ein Handauftragungsgerät, wie beispielsweise eine Klebepistole, ein Roboter, eine Werkzeugmaschine oder eine Handhabungsmaschine etc. sein.

Die Erfindung wird nachfolgend anhand von Ausführungsbeispielen mit den beigefügten Zeichnungen näher erläutert. Es zeigen:
- Figur 1 -: Perspektivische Ansicht einer Einrichtung zur Bewegungsnachverfolgung einer Handhabungseinheit mit einem Inertialsensor und einem Richtstrahlsensor sowie einem auf den Richtstrahlsensor ausgerichteten Richtstrahler,
- Figur 2 -: Skizze der Handhabungseinheit aus Figur 1 in Seitenansicht;
- Figur 3 -: Perspektivische Ansicht eines Werktisches mit hierauf ausgerichtetem Richtstrahler in einer zeilenweisen Initialisierungssequenz;
- Figur 4 -: Skizze eines Werktisches mit Richtstrahler in einer kreisfömigen Richtstrahlbahn zur Nachverfolgung der Bewegung;
- Figur 5 -: Skizze einer Einrichtung und drei hierauf ausgerichteten Richtstrahlem zur Triangulation.

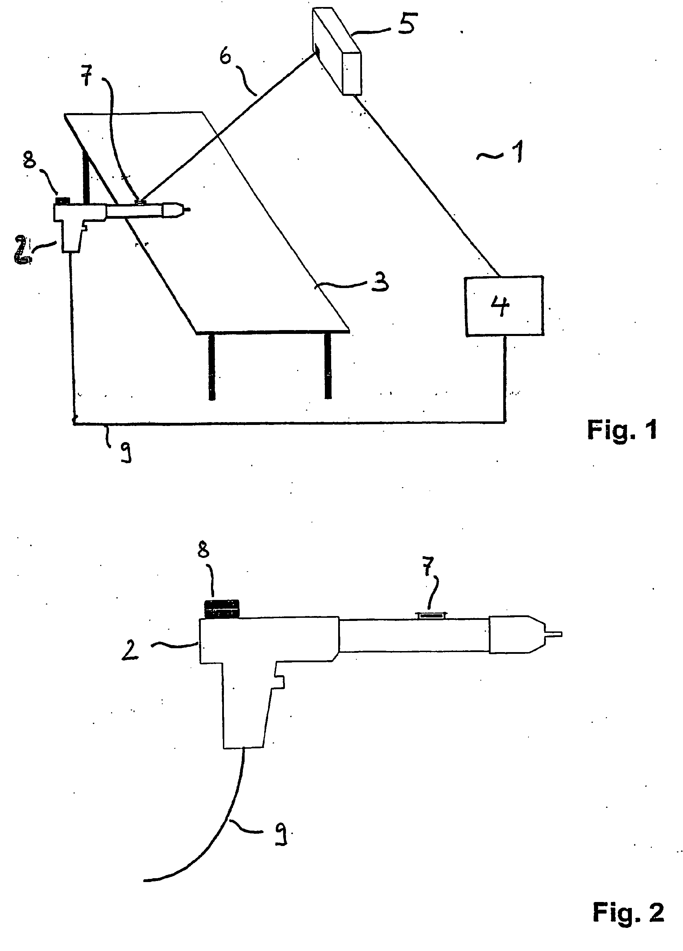

Die Figur 1 lässt eine Skizze einer Einrichtung 1 zur Nachverfolgung der Bewegung einer Handhabungseinheit 2 erkennen, die von einem Werker zur Bearbeitung von Werkstücken (nicht dargestellt) auf einem nicht zwingend notwendigen Werktisch 3 genutzt wird. Die Handhabungseinheit 2 ist beispielsweise ein Handauftragsgerät, wie beispielsweise eine Klebepistole zum Aufbringen von Klebstoffen.

Die Handhabungseinheit 2 ist über eine Signalauswerteeinheit 4 mit einem Richtstrahler 5 gekoppelt, der eine gerichtete Strahlung 6 ausstrahlt. Die gerichtete Strahlung 6 kann beispielsweise ein Laserstrahl, eine Mikrowellenstrahlung, eine Terahertzstrahlung oder ähnliches sein.

Der Richtstrahler 5 hat nicht dargestellte Aktuatoren zur Ausrichtung des Richtstrahls 6 in einstellbaren Winkeln in Bezug auf eine festgelegte Raumebene. Die Raumebene wird durch die feste Montageposition des Richtstrahlers 5 bestimmt. Weiterhin sind Winkelsensoren (nicht dargestellt) in dem Richtstrahler 5 vorgesehen, um den aktuellen Richtstrahlwinkel (Raumwinkel) des Richtstrahls 6 in Bezug auf die Raumebene zu ermitteln. An der Außenseite der Handhabungseinheit 2 ist mindestens ein Richtstrahlsensor 7 angeordnet, mit dem der Richtstrahl 6 detektiert wird.

Bei einer Bewegung des Werkzeugs wird die Verlagerung des Richtstrahls 6 von dem Richtstrahlsensor 7 erkannt und an die Signalauswerteinheit 4 weitergegeben. Diese steuert dann die Aktuatoren des Richtstrahlers 5 zur Nachführung des Richtstrahls 6 auf den Richtstrahisensor 7 an. Aus der Änderung des Richtstrahlwinkeis bzw. dem Richtstrahlwinkel selbst kann dann unmittelbar die Bewegung des Werkzeuges bestimmt werden.

Optional hat die Handhabungseinheit 2 weiterhin einen Inertialsensor 8, wie beispielsweise einen Beschleunigungssensor, mit dem autark aus der Beschleunigung die Bewegung der Handhabungseinheit 2 ebenfalls ermittelt wird. Dieser Inertialsensor 8 ist ebenfalls mit der Signalauswerteeinheit gekoppelt, um einen Abgleich mit der in Abhängigkeit von Lichtstrahlwinkein ermittelten Bewegung durchzuführen und eine Akkumulation von Messfehlern des Inertialsensors 8 zu vermeiden.

Der Inertialsensor 8 kann alternativ oder zusätzlich zum Beschleunigungssensor auch mindestens einen Drehratensensor haben, mit dem autark aus der Drehrate die Drehung der Handhabungseinheit 2, d.h. eine rotatorische Bewegung ermittelbar ist.

Mit der dargestellten Einrichtung 1 kann dann eine der Größen Abstand, Position, Raumwinkel oder Orientierung oder eine ihrer Änderungsgrößen bestimmt und hieraus die Bewegung des Werkzeugs abgeleitetet werden.

Der Inertialsensor 8 ist fest an der Handhabungseinheit 2 befestigt, dessen oben genannten Größen bestimmt werden sollen. Zur Verarbeitung der gerichteten Strahlung sind ein oder mehrere Sender und/oder Empfänger als Richtstrahlsensoren 7 an der Handhabungseinheit 2 angebracht.

Die Figur 2 lässt eine Handauftragungseinheit als Handhabungseinheit 2 in Seitenansicht als Skizze erkennen. Es wird deutlich, dass mindestens ein Richtstrahlsensor 7 sowie der Inertialsensor 8 an der Handhabungseinheit 2 angebracht sind. Die Messdaten, die zur der Signalauswerteeinheit 4 geführt werden, werden beispielsweise drahtgebunden über ein Datenkabel 9 oder optional auch drahtlos zur Signalauswerteelnheit 4 geleitet.

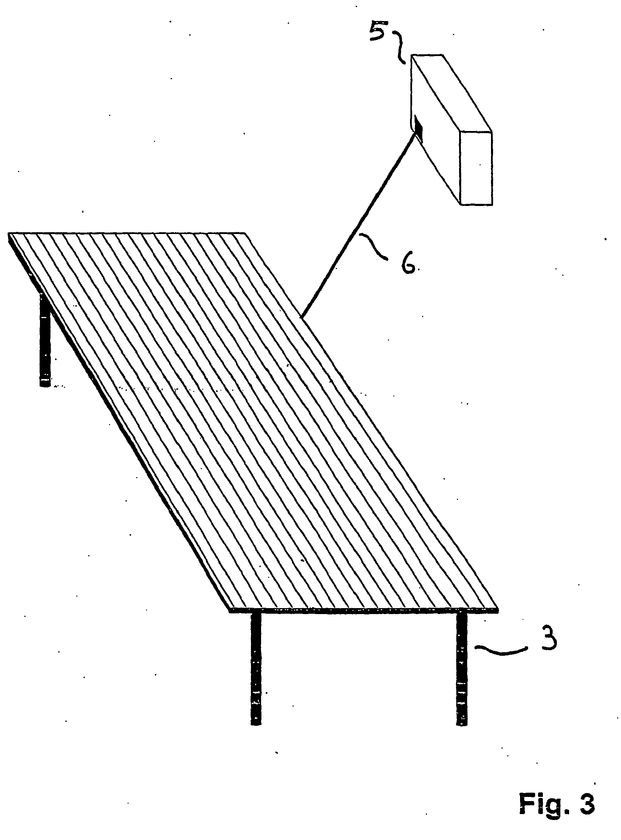

Die Figur 3 lässt einen Werktisch 3 sowie einen hierauf ausgerichteten Richtstrahler 5 in perspektivischer Ansicht erkennen. Zur Initialisierung der Bewegungsnachverfolgung wird ein Richtstrahlsensor 7 einer Handhabungseinheit 2 automatisch gesucht, indem der durch den Werktisch 3 definierte Raumbereich abgescannt wird. Hier wird der Richtstrahl 6 alternierend zwischen zwei Extrempositionen einer Achse, wie beispielsweise der Längsachse des Werktisches 3 positioniert. Durch das Umschalten des Laserpunktes zwischen den Extrempositionen entsteht eine Linie. Gleichzeitig durchläuft eine zweite Achse des Richtstrahlers 5 alle Werte zwischen den Extrema dieser vorzugsweise quer zur ersten Achse ausgerichteten zweiten Achse mit einer definierten Zuwachsrate. Die Folge ist eine Ansammlung von Linien in einem definierten Abstand. Sobald der Richtstrahl 6 des Richtstrahlers 5 auf einen Richtstrahlsensor 7 trifft, ist eine Koordinate der Position des Richtstrahlsensors 7 ermittelt. Auf gleiche Weise sind auch weitere Koordinaten ermittelbar.

Zur Nachführung des Richtstrahls 6 auf den sich bewegenden Richtstrahlsensor 7 kann der Richtstrahlsensor 7 beispielsweise aus einer Gruppe von Einzelsensoren bestehen. Die Bewegungsrichtung wird dann aus der Verlagerung des Auftreffpunktes des Richtstrahls 6 von einem Einzelsensor auf den angrenzenden Einzelsensor des Richtstrahlsensors 7 erkannt und der Richtstrahl 8 kann durch entsprechende Verkippung das Richtstrahlers 5 dem Richtstrahlsensor 7 nachgeführt werden.

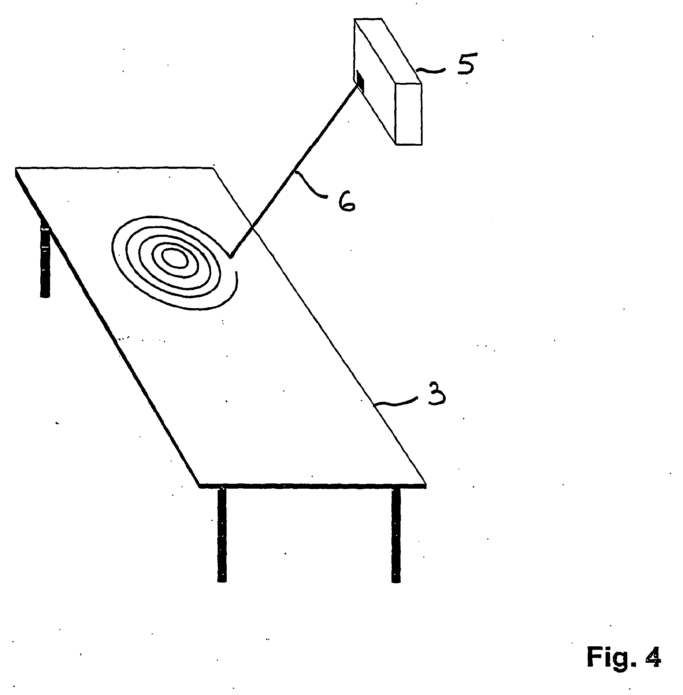

Die Figur 4 lässt eine andere Ausführungsform der Nachführung des Richtstrahls 6 an den Richtstrahlsensor 7 erkennen. Wenn sich die Handhabungseinheit 2 und damit der Richtstrahlsensor 7 bewegt, wird der Richtstrahl 6 von dem Richtstrahlsensor 7 nicht mehr detektiert. Da eine Bewegung stetig erfolgt kann in einer beliebig kurzen Zeitspanne auch nur eine beliebig kurze Strecke zurückgelegt worden sein. Der Richtstrahlsensor 7 muss sich also in unmittelbarer Nähe zur vorher bekannten Position befinden. Um den Richtstrahlsensor 7, wieder aufzufinden kann die gerichtete Strahlung in vorgegebenen geometrischen Figuren, wie z. B. Kreisen, Spiralen, Rechtecken, ect, mit einem inkrementierten Abstand beginnend mit z. B. dem Wert Null um die letzte bekannte Position so lange bewegt werden, bis der Richtstrahlsensor 7 wieder den Richtstrahl 6 detektiert. Damit ist die neue Position des Richtstrahlsensors 7 und damit der Handhabungseinheit 2 bzw. des daran angeordneten Werkzeuges und die Bewegung der Handhabungseinheit 2 in einfacher Weise berechenbar.

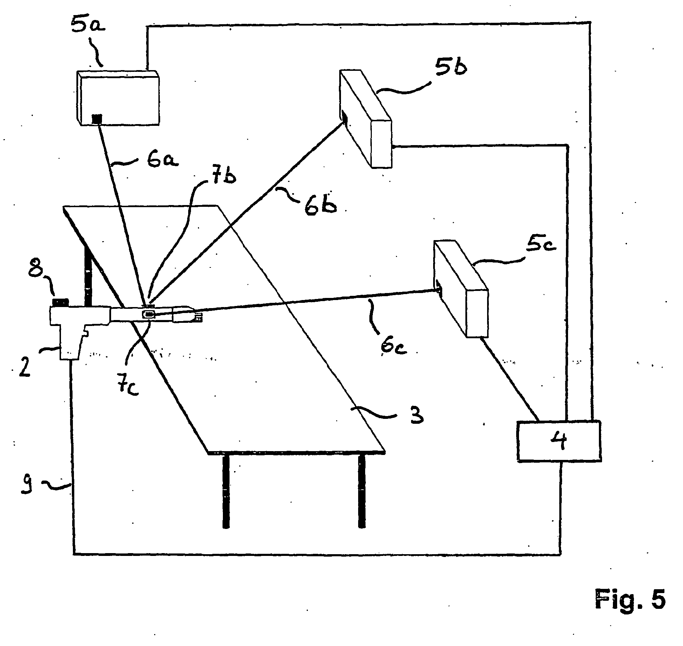

Die Figur 5 lässt eine Einrichtung 1 mit drei Richtstrahlern 5a, 5b, 5c erkennen, die als Triangulationssystem zusammenwirken. Für jeden Richtstrahler 5a, 5b, 5c ist ein zugeordneter Richtstrahlsensor 7a (nicht dargestellt, da verdeckt), 7b und 7c vorgesehen.

Zur Unterscheidung der Richtstrahler 5a, 5b, 5c sind die Richtstrahlen 6a, 6b, 6c vorzugsweise voneinander unterscheidbar. Dies kann durch Codierung der Richtstrahlen 6a, 6b, 6c oder durch unterschiedliche Wellenlängen erfolgen.

Durch die Triangulation kann nicht nur die Bewegung der Handhabungseinheit 2 in Bezug auf eine Raumebene bestimmt werden. Vielmehr ist es auch möglich, eine Verdrehung der Handhabungseinheit 2 zu detektieren. Das zusätzliche Inertialsystem mit Inertialsensor 8 ist zur Nachverfolgung der vollständigen Bewegung des Werkzeuges an sich entbehrlich, aber hilfreich, um bei Verdeckung der Punkt-zu-Punkt-Verbindung zwischen Richtstrahler 5 und zugeordnetem Richtstrahlsensor 7 weiterhin die Bewegung detektieren zu können.

Die Anordnung der Richtstrahlsensoren 7 und Inertialsensoren 8 an der Handhabungseinheit 2 ist prinzipiell beliebig, sofern ein definierter, unveränderbarer Bezug zu dem Werkzeug, wie beispielsweise der Spitze der Handhabungseinheit 2 sichergestellt ist. Gegebenenfalls sind je nach Ausbildung des Werkzeuges Korrekturgrößen zur berücksichtigen, die beispielsweise in Korrekturmatrizen werkzeugbezogen festgehalten werden können.

## Patentansprüche

1. Einrichtung (1) zur Nachverfolgung der Bewegung eines Werkzeuges einer Handhabungseinheit (2) mit mindestens einem auf das Werkzeug ausrichtbaren und nachführbaren Richtstrahler (5), der jeweils eine gerichtete Strahlung in Form eines Richtstrahls ausstrahlt, und einer Signalauswerteeinheit (4) zur Ermittlung der Bewegung, wobei
- der mindestens eine Richtstrahler (5) jeweils Aktuatoren zur Ausrichtung des jeweiligen Richtstrahls (6) des zugehörigen Richtstrahlers (5) in einstellbaren Winkeln in Bezug auf eine festgelegte Raumebene und Winkelsensoren zur Bestimmung des aktuellen Richtstrahlwinkels in Bezug auf die Raumebene hat, und die Winkelsensoren mit der Signalauswerteeinheit (4) verbunden sind,
- mindestens ein Richtstrahlsensor (7) zur Detektion jeweils eines auf einen zugeordneten Richtstrahlsensor (7) ausgerichteten Richtstrahls (6) in festem Bezug auf das Werkzeug mit dem Werkzeug mitbewegbar angeordnet und mit der Signalauswerteeinheit (4) verbunden sind, und
- die Signalauswerteeinheit (4) zur Nachführung des mindestens einen Richtstrahls (6) auf einen zugeordneten, sich bewegenden Richtstrahlsensor (7) und zur Ermittlung der beliebigen Bewegung des Werkzeuges im dreidimensionalen Raum in Abhängigkeit von den Richtstrahlwinkeln eingerichtet ist,
**dadurch gekennzeichnet, dass** mindestens ein Inertialsensor (8) mit dem Werkzeug zur quantitativen Erfassung der Beschleunigung und/oder Drehrate und Erfassung der Beschleunigungsrichtung und/oder Drehrichtung des Werkzeuges und mit einem Signalausgang mit der Signalauswerteeinheit (4) verbunden ist, und dass die Signalauswerteeinheit (4) zur Korrektur der mit den Signalen des Inertialsensors (8) ermittelten Bewegungsinformationen durch die mit dem mindestens einen Richtstrahler (5) ermittelten Bewegungsinformationen und zur Nachverfolgung der Bewegung des Werkzeuges und/oder zur Nachführung des mindestens einen Richtstrahlers (5) in Abhängigkeit von den Beschleunigungs- und/oder Drehratensignalen des Inertialsensors (8) eingerichtet ist.

2. Einrichtung (1) nach Anspruch 1, **dadurch gekennzeichnet, dass** die Signalauswerteeinheit (4) zur Nachverfolgung der Bewegung des Werkzeugs und Nachführung eines Richtstrahlers (5) bei Unterbrechung des zugehörigen Richtstrahls (6) in Abhängigkeit von den mit dem Inertialsensor (8) ermittelten Bewegungsinformationen eingerichtet ist.

3. Einrichtung (1) nach Anspruch 1 oder 2, **dadurch gekennzeichnet, dass** die Signalauswerteeinheit (4) zur Ermittlung der translatorischen Bewegungen des Werkzeugs in Abhängigkeit von den detektierten Signalen des mindestens einen Richtstrahlsensors (7) und zur Ermittlung der rotatorischen Bewegungen des Werkzeuges in Abhängigkeit von Drehratensignalen des Inertialsensors (8) eingerichtet ist.

4. Einrichtung (1) nach einem der vorhergehenden Ansprüche, **dadurch gekennzeichnet, dass** mindestens ein Richtstrahlsensor (7) aus einer Gruppe von nebeneinander angeordneten Einzelsensoren gebildet ist und dass die Signalauswerteeinheit (4) zur Nachführung des mindestens einen Richtstrahlers (5) in Abhängigkeit von einer Verlagerung eines detektierten Richtstrahls (6) eines Richtstrahlers (5) von einem Einzelsensor auf einen benachbarten Einzelsensor und in Abhängigkeit von der bekannten räumlichen Lage der Einzelsensoren zueinander eingerichtet ist.

5. Einrichtung (1) nach einem der vorhergehenden Ansprüche, **dadurch gekennzeichnet, dass** mindestens einer der Richtstrahlsensoren (7) aus einem Halbleiterfoto-Flächenelement mit einer gemeinsamen Anode bzw. Kathode und einer Mehrzahl von jeweils einem Flächenbereich des Halbleiterfoto-Flächenelementes zugeordneten Kathoden bzw. Anoden gebildet ist und dass die Signalauswerteeinheit (4) zur Nachführung des mindestens einen Richtstrahlers (5) in Abhängigkeit von einer Verlagerung eines detektierten Richtstrahls (6) eines Richtstrahlers (5)von einen Flächenbereich auf einem benachbarten Flächenbereich des Halbleiterfoto-Flächenelementes eingerichtet ist.

6. Einrichtung (1) nach Anspruch 5, **dadurch gekennzeichnet, dass** das Halbleiterfoto-Flächenelement eine Fotodiode, ein Fototransistor oder ein optischer Sensor ist.

7. Einrichtung (1) nach einem der vorhergehenden Ansprüche, **dadurch gekennzeichnet, dass** die Einrichtung (1) genau einen Richtstrahler (5) zur Detektion der Bewegung des Werkzeuges in Bezug auf eine Raumebene hat.

8. Einrichtung (1) nach einem der Ansprüche 1 bis 6, **dadurch gekennzeichnet, dass** die Einrichtung (1) mindestens zwei Richtstrahler (5) zur Detektion der Bewegung des Werkzeuges im dreidimensionalen Raum hat.

9. Einrichtung (1) nach einem der vorhergehenden Ansprüche, **dadurch gekennzeichnet, dass** mindestens ein Richtstrahler (5) zur Emission eines Laserstrahls, einer Infrarotstrahlung, einer Ultraschallstrahlung, einer Mikrowellenstrahlung oder einer Terahertzstrahlung eingerichtet ist.

10. Einrichtung (1) nach einem der vorhergehenden Ansprüche, **dadurch gekennzeichnet, dass** die Signalauswerteeinheit (4) zur Initialisierung der Einrichtung (1) durch Abscannen eines Raumbereichs mit mindestens einem Richtstrahl (6) in einer Ausrichtsequenz zur Lokalisierung des mindestens einen Richtstrahlsensors (7) des Werkzeuges eingerichtet ist.

11. Einrichtung (1) nach Anspruch 10, **dadurch gekennzeichnet, dass** die Signalauswerteeinheit (4) zum Abscannen vorgegebener geometrischer Figuren oder parallel nebeneinander verlaufender Zeilen des Raumbereichs zeitlich hintereinander eingerichtet ist.

12. Einrichtung (1) nach einem der vorhergehenden Ansprüche, **dadurch gekennzeichnet, dass** die Signalauswerteinheit (4) zur Aufzeichnung der nachverfolgten Bewegung des Werkzeuges in einem Speicher eingerichtet ist, insbesondere zur Abspeicherung von Bahnkurven.

13. Einrichtung (1) nach einem der vorhergehenden Ansprüche, **dadurch gekennzeichnet, dass** eine Mehrzahl von Richtstrahlern (5) vorgesehen ist, die jeweils einen Richtstrahl (6) mit voneinander unterschiedlichen Wellenlängen, Modulationen und/oder Codierungen ausstrahlen, und der mindestens eine Richtstrahlsensor (7) und/oder die Signalauswerteeinheit (4) zur selektiven Detektion der voneinander unterschiedlichen Richtstrahlen (6) eingerichtet ist.

14. Einrichtung (1) nach einem der vorhergehenden Ansprüche, **dadurch gekennzeichnet, dass** die Handhabungseinheit (2) mindestens teilweise handgeführt ist, beispielsweise ein handgeführtes Montagewerkzeug, ein Handauftragungsgerät oder einer Klebepistole.

15. Einrichtung (1) nach einem der Ansprüche 1 bis 14, **dadurch gekennzeichnet, dass** die Handhabungseinheit (2) ein Roboter, eine Werkzeugmaschine und/oder eine Handhabungsmaschine ist.

16. Verfahren zur Nachverfolgung der Bewegung eines Werkzeuges einer Handhabungseinheit (2) mit mindestens einem auf das Werkzeug ausrichtbaren und nachführbaren Richtstrahler (5), der jeweils eine gerichtete Strahlung in Form eines Richtstrahls (6) ausstrahlt, mit den Schritten:
a) Ausrichtung des mindestens einen Richtstrahls (6) in einem Winkel in Bezug auf eine festgelegte Raumebene so, dass ein Richtstrahl (6) von einem in festem Bezug auf das Werkzeug mit dem Werkzeug mitbewegbar angeordneten und einem jeweiligen Richtstrahl (6) zugeordneten Richtstrahlsensor (7) detektiert wird,
b) Nachführen des mindestens einen Richtstrahls (6) auf den jeweils zugeordneten Richtstrahlsensor (7) bei sich bewegendem Werkzeug, so dass der mindestens eine Richtstrahl (6) weiterhin von dem jeweils zugeordueten Richtstrahlsensor (7) detektiert wird, und
c) Ermitteln der beliebigen Bewegung des Werkzeuges im dreidimensionalen Raum in Abhängigkeit von dem sich bei der Nachführung ändernden Richtstrahlwinkel,
**gekennzeichnet durch** quantitative Erfassung der Beschleunigung des Werkzeuges mit einem Inertialsensor (8), Korrektur der mit den Signalen des Inertialsensors (8) ermittelten Bewegungsinformationen durch die mit dem mindestens einen Richtstrahler (5) ermittelten Bewegungsinformationen und Nachverfolgung der Bewegung des Werkzeuges weiterhin in Abhängigkeit von den Beschleunigungssignalen des Inertialsensors (8).

17. Verfahren nach Anspruch 16, **gekennzeichnet durch** Detektion eines Richtstrahls mit einem zugeordneten Richtstrahlsensor (7), der aus einer Gruppe von nebeneinander angeordneten Einzelsensoren gebildet ist, Auswertung der Verlagerung des detektierten Richtstrahls (6) von einem Einzelsensor auf einen benachbarten Einzelsensor und Nachführung des zugehörigen Richtstrahlers (5) in Abhängigkeit von der erkannten Verlagerung.

18. Verfahren nach Anspruch 16 oder 17, **gekennzeichnet durch** Nachführen eines Richtstrahlers (5) in Abhängigkeit von einer Verlagerung des detektierten Richtstrahls (6) dieses Richtstrahlers (5) von einem Flächenbereich eines Halbleiterfoto-Flächenelements auf einem benachbarten Flächenbereich desselben Halbleiterfoto-Flächenelementes.

19. Verfahren nach einem der Ansprüche 16 bis 18, **gekennzeichnet durch** Nachführung eines Richtstrahlers (5) bei Unterbrechung des zugehörigen Richtstrahls (6) in Abhängigkeit von den mit dem Inertialsensor (8) ermittelten Bewegungsinformationen.

20. Verfahren nach einem der Ansprüche 16 bis 19, **gekennzeichnet durch** Ermitteln der translatorischen Bewegung des Werkzeuges in Abhängigkeit von den detektieren Signalen des mindestens einen Richtstrahlsensors (7) und Ermitteln der rotatorischen Bewegung des Werkzeugs in Abhängigkeit von Signalen des Inertialsensors (8).

21. Verfahren nach einem der Ansprüche 16 bis 20, **gekennzeichnet durch** vorhergehende Initialisierung der Einrichtung mittels Abscannen eines Raumbereichs mit mindestens einem Richtstrahl (6) in einer Ausrichtsequenz zur Lokalisierung des mindestens einen Richtstrahlsensors (7) des Werkzeugs.

22. Verfahren nach Anspruch 21, **gekennzeichnet durch** Abscannen vorgegebener geometrischer Figuren oder parallel nebeneinander verlaufender Zeilen des Raumbereichs zeitlich hintereinander.

23. Verfahren nach einem der Ansprüche 16 bis 22, **gekennzeichnet durch** Aufzeichnung der nachverfolgten Bewegung des Werkzeuges in einem Speicher, insbesondere zur Abspeicherung von Bahnkurven des Werkzeugs.

24. Verfahren nach einem der Ansprüche 16 bis 23, **gekennzeichnet durch** Ausstrahlen einer Mehrzahl von Richtstrahlen (6) die voneinander unterschiedliche Wellenlängen und/oder Codierungen haben, und selektives Detektieren der voneinander unterschiedlichen Richtstrahlen (6).

## Claims

1. Device (1) for tracking the movement of a tool of a handling unit (2) comprising at least one directional radiator (5) that can be aligned with the tool and be tracked and each emitting a directional radiation in form of a directional beam, and a signal evaluation unit (4) for determining the movement, in which
- the at least one directional radiator (5) comprising actuators for aligning the directional beam (6) of a related directional radiator (5) at adjustable angles with reference to a fixed spatial plane, and angle sensors for determining the current directional beam angle with reference to the spatial plane, and the angle sensors are connected to the signal evaluation unit (4),
- at least one direction beam sensor (7) for detecting the directional beam (6) each being arranged with a fixed reference to the tool and movably with tool, and being connected to the signal evaluation unit (4), and
- the signal evaluation unit (4) is set up for tracking the at least one directional beam (6) onto an assigned, moving directional beam sensor (7), and for determining the arbitrary movement of the tool in three-dimensional space as a function of the directional beam angles,
**characterized in that** at least one inertial sensor (8) is connected to the tool for quantitatively acquiring the acceleration and/or rate of rotation and acquiring the direction of acceleration and/or direction of rotation of the tool and is connected with a signal output to the signal evaluation unit (4), and **in that** the signal evaluation unit (4) is set up for correcting the movement information determined with the aid of the signals of the inertial sensor (8) by means of the movement information determined with the aid of the at least one directional radiator (5), and for tracking the movement of the tool and/or for tracking the at least one directional radiator (5) as a function of the acceleration signals and/or rate of rotation signals of the inertial sensor (8).

2. Device (1) as claimed in claim 1, **characterized in that** the signal evaluation unit (4) is set up for tracking the movement of the tool, and for tracking of a directional radiator (5) upon interruption of a related directional beam (6) as a function of the movement information determined with the aid of the inertial sensor (8).

3. Device (1) as claimed in claim 1 or 2, **characterized in that** the signal evaluation unit (4) is set up for determining the translatory movements of the tool as a function of the detected signals of the at least one directional beam sensor (7), and for determining the rotary movements of the tool as a function of rate of rotation signals of the inertial sensor (8).

4. Device (1) as claimed in one of the preceding claims, **characterized in that** at least one rotational beam sensor (7) is formed from a group of individual sensors arranged next to one another, and **in that** the signal evaluation unit (4) is set up for tracking the at least one directional radiator (5) as a function of a displacement of the detected directional beam (6) from an individual sensor onto a neighboring individual sensor, and as a function of the known spatial position of the individual sensors relative to one another.

5. Device (1) as claimed in one of the preceding claims, **characterized in that** at least one directional beam sensor (7) is formed from a photosemiconductor surface element with a common anode or cathode, and from a plurality of cathodes or anodes assigned respectively to a surface region of the photosemiconductor surface element, and **in that** the signal evaluation unit (4) is set up for tracking the at least one directional beam (5) as a function of a displacement of the detected directional beam (6) of a directional radiator (5) from a surface region onto a neighboring surface region of the photosemiconductor surface element. '

6. Device (1) as claimed in claim 5, **characterized in that** the photosemiconductor surface element is a photodiode, a phototransistor or an optical sensor.

7. Device (1) as claimed in one of the preceding claims, **characterized in that** the device (1) has exactly one directional radiator (5) for detecting the movement of the tool with reference to a spatial plane.

8. Device (1) as claimed in one of claims 1 to 6, **characterized in that** the device (1) has at least two directional radiators (5) for detecting the movement of the tool in three-dimensional space.

9. Device (1) as claimed in one of the preceding claims, **characterized in that** at least one of the directional radiators (5) is set up for emitting a laser beam, an infrared radiation, an ultrasonic radiation, a microwave radiation or a terahertz radiation.

10. Device (1) as claimed in one of the preceding claims, **characterized in that** the signal evaluation unit (4) is set up for initializing the device (1) by scanning a spatial region with the aid of at least one directional beam (6) in an alignment sequence for localizing the at least one directional beam sensor (7) of the tool.

11. Device (1) as claimed in claim 10, **characterized in that** the signal evaluation unit (4) is set up for scanning prescribed geometric figures or for scanning sequentially in time rows of the spatial region running parallel next to one another.

12. Device (1) as claimed in one of the preceding claims, **characterized in that** the signal evaluation unit (4) is set up for recording the tracked movement of the tool in a memory, in particular for storing path curves.

13. Device (1) as claimed in one of the preceding claims, **characterized in that** a plurality of directional radiators (5) are provided that each emit a directional beam (6) of mutually different wavelengths, modulations and/or codings, and the at least one directional beam sensor (7) and/or the signal evaluation unit (4) is set up for selectively detecting the mutually different directional beams (6).

14. Device (1) as claimed in one of the preceding claims, **characterized in that** the handling unit (2) is at least partially hand guided, for example being a hand guided mounting tool, a manual application device or a glue gun.

15. Device (1) as claimed in one of claims 1 to 14, **characterized in that** the handling unit (2) is a robot, a machine tool and/or a handling machine.

16. Method for tracking the movement of a tool of a handling unit (2) comprising at least one directional radiator (5) that can be aligned with the tool and be tracked, having the steps of:
a) aligning the at least one directional beam (6) at an angle with reference to a fixed spatial plane such that a directional beam (6) is detected by a directional beam sensor (7) assigned to a respective directional beam (6) and arranged with a fixed reference to the tool and movably therewith,
b) tracking the at least one directional beam (6) onto the respective assigned directional beam sensor (7) in the case of a moving tool such that the at least one directional beam (6) continues to be detected by the respectively assigned directional beam sensor (7), and
c) determining the arbitrary movement of the tool in three-dimensional space as a function of the directional beam angle, which changes in the tracking,
**characterized by** quantitatively acquiring the acceleration of the tool with the aid of an inertial sensor (8), correcting the movement information determined with the aid of the signals of the inertial sensor (8) by means of the movement information emitted with the aid of the at least one directional radiator (5), and continuing to track the movement of the tool as a function of the acceleration signals of the inertial sensor (8).

17. Method as claimed in claim 16, **characterized by** detecting a directional beam with the aid of a directional beam sensor (7) that is formed from a group of individual sensors arranged next to one another, evaluating the displacement of the detected directional beam (6) from an individual sensor onto a neighboring individual sensor, and tracking the relateddirectional radiator (5) as a function of the detected displacement.

18. Method as claimed in claim 16 or 17, **characterized by** tracking the a directional radiator (5) as a function of a displacement of the detected directional beam (6) from a surface region of a photosemiconductor surface element onto a neighboring surface region of the same photosemiconductor surface element.

19. Method as claimed in one of claims 16 to 18, **characterized by** tracking the directional radiator (5) upon interruption of at least one directional beam (6) as a function of the movement information determined with the aid of the inertial sensor (8).

20. Method as claimed in one of claims 16 to 19, **characterized by** determining the translatory movement of the tool as a function of the detected signals of the directional beam sensors (7), and determining the rotary movement of the tool as a function of signals of the inertial sensor (8).

21. Method as claimed in one of claims 16 to 20, **characterized by** preceding initialization of the device by means of scanning a spatial region with the aid of at least one directional beam (6) in an alignment sequence for localizing the at least one directional beam sensor (7) of the tool.

22. Method as claimed in claim 21, **characterized by** scanning prescribed geometrical figures, or by scanning sequentially in time rows of the spatial region running parallel next to one another.

23. Method as claimed in one of claims 16 to 22, **characterized by** recording the tracked movement of the tool in a memory, in particular for storing path curves of the tool.

24. Method as claimed in one of claims 16 to 23, **characterized by** emitting a plurality of directional beams (6) that have mutually different wavelengths and/or codings, and selectively detecting the mutually different directional beams (6).

## Revendications

1. Installation (1) pour suivre le mouvement d'un outil d'une unité de manipulation (2) comportant au moins un émetteur de rayons directionnels (5) qui peuvent être dirigés sur l'outil et le suivre, l'émetteur générant un rayon sous la forme d'un rayon directionnel ainsi qu'une unité d'exploitation de signal (4) pour déterminer le mouvement, installation dans laquelle
- au moins un émetteur de rayon directionnel (5) comporte des actionneurs pour aligner le rayon directionnel respectif (6) qu'il génère suivant des angles réglables par rapport à un plan fixe de l'espace et des capteurs d'angle pour déterminer l'angle de rayonnement directionnel actuel par référence au plan de l'espace, les capteurs d'angle étant reliés à une unité d'exploitation de signal (4),
- au moins un capteur de rayon directionnel (7) détecte chaque fois le rayon directionnel (6) dirigé vers un capteur de rayon directionnel (7) associé, suivant une relation fixe par rapport à l'outil en étant asservi sur le mouvement de l'outil et en étant relié à l'unité d'exploitation de signal (4), et
- l'unité d'exploitation de signal (4) est conçue pour asservir au moins un faisceau directionnel (6) sur un capteur de faisceau directionnel (7) associé, mobile, et pour déterminer le mouvement quelconque de l'outil dans l'espace à trois dimensions en fonction des angles du faisceau directionnel,
**caractérisée en ce qu'**
- au moins un capteur inertiel (8) est relié à l'outil pour la saisie quantitative de l'accélérateur et/ou de la vitesse de rotation et pour la saisie de la direction de l'accélération et/ou le sens de rotation de l'outil et il a une sortie de signal reliée à l'unité d'exploitation de signal (4), et
- l'unité d'exploitation de signal (4) est conçue pour corriger les informations de mouvement déterminées par les signaux du capteur inertiel (8), informations qui, avec les informations de mouvement fournies par au moins un rayon directionnel (5), et pour assurer l'asservissement du mouvement de l'outil et/ou pour asservir au moins un émetteur de rayon directionnel (5), en fonction des signaux d'accélération et/ou des signaux de vitesse de rotation du capteur inertiel (8).

2. Installation (1) selon la revendication 1,
**caractérisée en ce que**
l'unité d'exploitation de signal (4) est conçue pour suivre le mouvement de l'outil et pour asservir un émetteur de rayon directionnel (5) en cas de coupure du rayon directionnel (6) correspondant, en fonction des informations de mouvement déterminées par le capteur inertiel (8).

3. Installation (1) selon la revendication 1 ou 2,
**caractérisée en ce que**
l'unité d'exploitation de signal (4) est conçu pour déterminer les mouvements de translation de l'outil en fonction des signaux détectés provenant d'au moins un capteur de rayon directionnel (7) et pour déterminer les mouvements de rotation de l'outil en fonction des signaux de vitesse de rotation du capteur inertiel (8).

4. Installation (1) selon l'une des revendications précédentes,
**caractérisée par**
au moins un capteur de rayon directionnel (7) appartenant à un groupe de capteurs séparés, installés les uns à côté des autres et l'unité d'exploitation de signal (4), est conçue pour asservir au moins un émetteur de rayon directionnel (5), en fonction du déplacement d'un rayon directionnel (6) détecté d'un émetteur de rayon directionnel (5) d'un capteur simple sur un capteur simple voisin et en fonction de la position spatiale connue des différents capteurs les uns par rapport aux autres.

5. Installation (1) selon l'une des revendications précédentes,
**caractérisée en ce qu'**
- au moins l'un des capteurs de rayon directionnel (7) est formé d'un élément de surface de photocellule semi-conductrice avec une anode ou une cathode commune et plusieurs cathodes ou anodes associées chacune à une zone de surface de cet élément de surface à photocellule semi-conductrice, et
- l'unité d'exploitation de signal (4) pour asservir au moins un émetteur de rayon directionnel (5) en fonction d'un déplacement d'un rayon directionnel détecté (6) émis par un émetteur (5), est conçue pour passer d'une zone de surface à une zone de surface voisine de l'élément de surface de photocellule semi-conductrice.

6. Installation (1) selon la revendication 5,
**caractérisée en ce que**
l'élément de surface de photocellule semi-conductrice est une photo diode, un phototransistor ou un capteur optique.

7. Installation (1) selon l'une des revendications précédentes,
**caractérisée en ce que**
l'installation (1) comporte précisément un émetteur de rayon directionnel (5) pour détecter le mouvement de l'outil par rapport à un plan de l'espace.

8. Installation (1) selon l'une des revendications 1 à 6,
**caractérisée en ce que**
l'installation (1) comporte au moins deux émetteurs de rayon directionnel (5) pour détecter le mouvement de l'outil dans l'espace en trois dimensions.

9. Installation (1) selon l'une des revendications précédentes,
**caractérisée en ce qu'**
au moins un émetteur de rayon directionnel (5) est conçu pour émettre un rayon laser, un faisceau infrarouge, un faisceau d'ultrasons, un faisceau de micro-ondes ou un faisceau de terahertz.

10. Installation (1) selon l'une des revendications précédentes,
**caractérisée en ce que**
l'unité d'exploitation de signal (4) est conçue pour initialiser l'installation (1) en balayant une zone de l'espace avec au moins un rayon directionnel (6) dans une séquence d'alignement pour localiser au moins un capteur de rayon directionnel (7) de l'outil.

11. Installation (1) selon la revendication 10,
**caractérisée en ce que**
l'unité d'exploitation de signal (4) est conçue pour balayer successivement dans le temps des figures géométriques prédéfinies ou des cellules successives, parallèles, de la zone de l'espace.

12. Installation (1) selon l'une des revendications précédentes,
**caractérisée en ce que**
l'unité d'exploitation de signal (4) est conçue pour enregistrer le mouvement successif de l'outil dans une mémoire, notamment pour enregistrer des courbes de trajet.

13. Installation (1) selon l'une des revendications précédentes,
**caractérisée par**
un ensemble d'émetteurs de rayon directionnel (5) qui émettent chacun un rayon directionnel (6) avec des longueurs d'ondes, des modulations et/ou des codages différents et au moins un capteur de rayon directionnel (7) et/ou l'unité d'exploitation de signal (4) sont conçus pour une détection sélective des différents rayons directionnels (6) les uns par rapport aux autres.

14. Installation (1) selon l'une des revendications précédentes,
**caractérisée en ce que**
l'unité de manipulation (2) est au moins en partie conduite à la main, par exemple par un outil de montage conduit à la main, un appareil de revêtement appliqué à la main ou un pistolet à colle.

15. Installation (1) selon l'une des revendications 1 à 14,
**caractérisée en ce que**
l'unité de manipulation (2) est un robot, une machine outil et/ou une machine de manipulation.

16. Procédé de poursuite du mouvement d'un outil d'une unité de manipulation (2) avec au moins un émetteur de rayon directionnel (5) aligné sur l'outil et asservi sur celui-ci, et qui émet respectivement un faisceau dirigé sous la formé d'un rayon directionnel (6),
procédé comprenant les étapes suivantes :
a) aligner au moins un rayon directionnel (6) suivant un angle par rapport à un plan fixé dans l'espace pour que le rayon directionnel (6) soit dans une relation fixe par rapport à l'outil et soit déplacé avec l'outil et un capteur de rayon directionnel (7) associé à chaque rayon directionnel (6),
b) suivre au moins un rayon directionnel (6) sur le capteur de rayon directionnel (7) associé lorsque l'outil se déplace de façon qu'au moins un rayon directionnel (6) continue à être détecté par le capteur de rayon directionnel (7) respectivement associé, et
c) déterminer le mouvement quelconque de l'outil dans l'espace en trois dimensions en fonction de l'angle de rayon directionnel variable du fait de l'asservissement,
procédé **caractérisé par**
- la saisie quantitative de l'accélération de l'outil avec un capteur inertiel (8),
- la correction des informations de mouvement fournies par les signaux du capteur inertiel (8) par les informations de mouvement déterminées par au moins un émetteur de rayon directionnel (5), et
- la poursuite du mouvement de l'outil en fonction des signaux d'accélération du capteur inertiel (8).

17. Procédé selon la revendication 16,
**caractérisé par**
- la détection d'un rayon directionnel avec un capteur de rayon directionnel (7) associé formé d'un groupe de capteurs distincts, juxtaposés,
- l'exploitation du décalage du rayon directionnel détecté (6) par rapport à un capteur séparé vers un capteur séparé voisin, et
- l'asservissement de l'émetteur de rayon directionnel (5) correspondant, en fonction du déplacement détecté.

18. Procédé selon la revendication 16 ou 17,
**caractérisé par**
- l'asservissement d'un émetteur de rayon directionnel (5) en fonction d'un déplacement du rayon lumineux détecté (6) de cet émetteur de rayon directionnel (5), passant d'une zone de surface d'un élément de surface de photocellule semi-conductrice sur un élément de surface voisin de ce même élément de photocellule semi-conductrice.

19. Procédé selon l'une des revendications 16 à 18,
**caractérisé par**
l'asservissement d'un émetteur de rayon directionnel (5) en fonction des informations de mouvement fournies par le capteur inertiel (8) en cas d'interruption du rayon directionnel (6).

20. Procédé selon l'une des revendications 16 à 19,
**caractérisé par**
- la détermination du mouvement de translation de l'outil en fonction des signaux détectés par au moins un capteur de rayon directionnel (7), et
- la détermination du mouvement de rotation de l'outil en fonction des signaux fournis par le capteur inertiel (8).

21. Procédé selon l'une des revendications 16 à 20,
**caractérisé par**
une initialisation préalable de l'installation par balayage d'une plage de l'espace à l'aide d'au moins un rayon directionnel (6) dans une séquence d'alignement pour localiser au moins un capteur de rayon directionnel (7) de l'outil.

22. Procédé selon la revendication 21,
**caractérisé par**
le balayage de figures géométriques prédéfinies ou de lignes juxtaposées, parallèles de la zone de l'espace, successivement les unes après les autres.

23. Procédé selon l'une des revendications 18 à 22,
**caractérisé par**
l'enregistrement du mouvement de poursuite de l'outil dans une mémoire, notamment pour mémoriser les courbes du trajet de l'outil.

24. Procédé selon l'une des revendications 16 à 23,
**caractérisé par**
- l'émission d'un ensemble de rayons directionnels (6) qui ont des longueurs d'ondes et/ou des codages différents les uns des autres, et
- la détection sélective des rayons directionnels (6) différents les uns des autres.
